(19) **Europäisches Patentamt**
**European Patent Office**
**Office européen des brevets**

(11) **EP 2 177 774 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
***F16B 21/02*** *(2006.01)*

(21) Anmeldenummer: **08017922.9**

(22) Anmeldetag: **13.10.2008**

(54) **Befestigungselement und Vorrichtung zur Aufnahme eines Befestigungselementes**

Fastening element and device for receiving a fastening element

Elément de fixation et dispositif destiné à la réception d'un élément de fixation

(84) Benannte Vertragsstaaten:
**DE FR GB IT**

(43) Veröffentlichungstag der Anmeldung:
**21.04.2010 Patentblatt 2010/16**

(73) Patentinhaber: **Siemens Aktiengesellschaft**
**80333 München (DE)**

(72) Erfinder:
• **Deinhardt, Günther**
**92224 Amberg (DE)**
• **Fürholzer, Roland**
**92224 Amberg (DE)**
• **Ringer, Ulrich**
**92224 Amberg (DE)**

(56) Entgegenhaltungen:
**EP-A- 0 731 282    DE-A1- 2 328 412**

**Beschreibung**

Die Erfindung betrifft ein Befestigungselement umfassend, einen Bolzen mit einem einen ersten Querschnitt aufweisenden ersten Bereich und einem einen zweiten Querschnitt aufweisenden zweiten Bereich, einen Spannflügel mit einer ersten Auflagefläche, wobei der Spannflügel im zweiten Bereich angeordnet ist, einen Übergang von dem ersten auf dem zweiten Bereich, welcher zumindest teilweise als eine zweite Auflagefläche ausgestaltet ist, wobei die erste und die zweite Auflagefläche sich gegenüberliegend angeordnet sind, so dass zwischen der ersten Auflagefläche und der zweiten Auflagefläche durch Ausüben einer Drehbewegung ein erstes Materialteil und ein zweites Materialteil einspannbar sind.

Für den Aufbau von beispielsweise Elektronik-Systemen werden, je nach Anwendung, eine mehr oder weniger große Anzahl von Baugruppen beispielsweise nebeneinander an eine, beispielsweise an einer Schaltschrankwand befestigte, Profilschiene gehängt. Dabei wird eine obere Kante der Baugruppe zuerst eingehängt und durch eine Schwenkbewegung die untere Kante mit der Profilschiene verrastet und somit wird dieBaugruppe in ihre endgültige Position gebracht. Bei dem Positionieren der Baugruppen werden die Baugruppen vorzugsweise über einen Rückwandbus bzw. über Verbindungsklemmen miteinander kontaktiert. Damit sämtliche Kontaktierungen, auch unter beispielsweise industriellen Bedingungen, wie besonderen Vibrationen, Schock, Staub, Hitze, Kälte etc., gewährleistet sind, wird eine sichere Befestigungsmöglichkeit benötigt. Bei dem Einhaken einer Baugruppe über eine Profilschiene mittels eines Schnapphakens ist es von Nachteil, dass der Schnapphaken, um seine Funktionalität des Hinterrastens zu gewährleisten, ein Spiel zwischen einer Rastnase und der Profilschiene aufweisen muss. Ist dieses Spiel nicht vorhanden, funktioniert der Schnappmechanismus nicht. Dieses Spiel hat jedoch zufolge, dass bei einem richtig dimensionierten Schnapphaken im verrasteten Zustand keine ausreichende Anpresskraft zwischen der Baugruppe und der Profilschiene herrscht, welches für den Einsatz unter industriellen Bedingungen ungünstig ist.

Auch eine Lösung der zuvor genannten einrastbaren Baugruppe in eine Profilschiene bei der anstelle des Schnapphakens eine Schraubverbindung eingesetzt wird ist von Nachteil, da zur Betätigung der Schraube mehrere volle Umdrehungen benötigt werden und der Monteur für die Montage mehr Zeit benötigt.

Aus der EP 0 943 824 B1 ist ein mechanisches Verbindungselement als ein Schnellverschluss mit den Merkmalen des eingangs genannten Befestigungselementes bekannt. Nachteilig an diesem Verbindungselement ist es, dass ein durch die Drehbewegung resultierender Hub nicht ausreichend ist um eine geforderte Anpresskraft zu erzeugen. Auch sind aus den aus den Schriften EP 0 731 282 A1 und DE 23 28 412 A1 derartige Befestigungselemente bekannt.

Es ist daher die Aufgabe der Erfindung, ein Befestigungselement bereitzustellen, welches bei einer Drehbewegung des Befestigungselementes einen höheren Hub und damit einen besseren Toleranzausgleich erzeugt.

Die Aufgabe wird durch ein Befestigungselement mit den Merkmalen des Anspruchs 1 gelöst. Da der Spannflügel mit einer ersten Auflagefläche nach dem Stand der Technik mit relativ kleinen Flächen auf dem Spannflügel nur einen kleinen Hub zulässt, ist es vorteilhaft, wenn das Befestigungselement an seiner zweiten Auflagefläche zusätzliche Gleitkeile aufweist, wobei die Gleitkeile als sich um den Bolzen erstreckende Rampen ausgebildet sind. Da die Auflagefläche des Befestigungselementes in der Regel größer dimensioniert ist als der Spannflügel, kann durch eine Ausgestaltung der Gleitkeile bei einer Drehbewegung des Befestigungselementes ein größerer Hub und damit ein deutlich erhöhter Spannweg erzeugt werden. Damit ist die zweite Auflagefläche welche bisher eine flache, ebene Fläche war bzw. wie in EP 0 943 824 B1 beschrieben, welche mit einseitig schneidenförmigen Sicherungskanten versehen ist, für eine Erhöhung des Anpressweges erfindungsgemäß mit zusätzlichen Gleitkeilen ausgestaltet.

Der Spannflügel mit seinem ersten Flügelteil und seiner ersten Schrägfläche und seinem zweiten Flügelteil mit seiner zweiten Schrägfläche, wobei die erste und die zweite Schrägfläche die erste Auflagefläche bilden, verkeilen sich bei der Drehbewegung in einem dafür vorgesehenen Hohlraum des zweiten Materialteils und sorgen aufgrund ihrer Schrägflächen ebenfalls für einen anteiligen Hub bzw. für die Erzeugung einer anteiligen Spannkraft. Wird das Befestigungselement beispielsweise als Schnellspannverschluss für eine Baugruppe mit einer entsprechend dafür vorgesehenen Vorrichtung genutzt, so ist es weiterhin vorteilhaft, dass der Spannflügel zweiteilig, also einen ersten Flügelteil und einen zweiten Flügelteil aufweist, da mit diesem "Doppelflügel" ein seitliches Verrücken der Baugruppe während des Verriegelungsvorgangs aufgrund einseitiger Reibung des Spannflügels an beispielsweise einer Profilschienenwand, verhindert wird. Dabei ist es vorteilhaft, dass sich ein "spielfreier" Sitz im montierten Zustand ergibt, d.h., die Toleranzen zwischen den Auflageflächen werden minimiert.

Weiterhin ist es vorteilhaft, wenn der Spannflügel zum Eindringen in eine Öffnung des zweiten Materialteils ausgestaltet ist. Der Spannflügel ist dabei derart ausgestaltet, dass er durch eine Öffnung, beispielsweise in der bereits erwähnten Profilschiene, eindringen kann und durch Verdrehen in eine Stellung gebracht wird, aus der ein herausrutschen des Spannflügels verhindert wird.

In einer weiter optimierten Ausgestaltung ist der erste Gleitkeil bzw. der zweite Gleitkeil zum kraftschlüssigen Anschmiegen an eine erste Gegenfläche bzw. an eine zweite Gegenfläche des zweiten Materialteils ausgestaltet. Ein Winkel der Gleitkeile ist bei einer jeweils verwendeten Materialpaarung so gewählt, dass eine Selbsthemmung auftritt. D.h., die Verriegelung öffnet sich nicht von alleine, da die Reibungskräfte an den verpressten Flächen größer sind als die resultierenden Kräfte, die aufgrund der Verspannung die Verriegelung zum Öffnen bewegen würden.

Da derartige Befestigungselemente bei einer Montage, beispielsweise über Kopf, möglicherweise aus ihren Vorrichtungen herausfallen können ist es vorteilhaft, dass der erste Bereich mit einer Nut zur Aufnahme einer Verrastnase ausgestaltet ist. Diese Verrastnase, welche in die Nut einrastet, dabei aber ein Drehen des Befestigungselement zulässt, verhindert ein herausfallen des Befestigungselementes aus dem jeweils zu befestigenden Bauteil. Damit wird das Befestigungselement zu dem jeweiligen Material oder Bauteil unverlierbar.

Bevorzugt ist ein Kopfbereich des ersten Bereiches zur Aufnahme eines Werkzeuges zum Ausüben der Drehbewegung ausgestaltet. Beispielsweise ist am Kopfbereich ein Sechskant angeordnet oder ein Schlitz zur Aufnahme eines Werkzeuges.

Da die Drehbewegung eines solchen Befestigungselementes in der Regel auf eine Einvierteldrehung begrenzt ist, ist es vorteilhaft, wenn am Übergang ein Anschlag zur Begrenzung der Drehbewegung angeordnet ist. Ein Hinausdrehen über ein maximal zu erzeugendes Drehmoment wird somit verhindert.

Weitere vorteilhafte Ausgestaltungen und mögliche Bauformen werden anhand der Zeichnung erläutert. Es zeigen:

FIG 1 bis FIG 6    ein Befestigungselement in vier Seitenan sichten, einer Unteransicht und einer Drauf sicht,

FIG 7              ein Befestigungselement mit einer dazugehö rigen Vorrichtung angeordnet an einer Bau gruppe zur Befestigung an einer Profilschie ne in einer perspektivischen Darstellung und

FIG 8              die Vorrichtung zur Aufnahme des Befesti gungselementes in einer perspektivischen Darstellung.

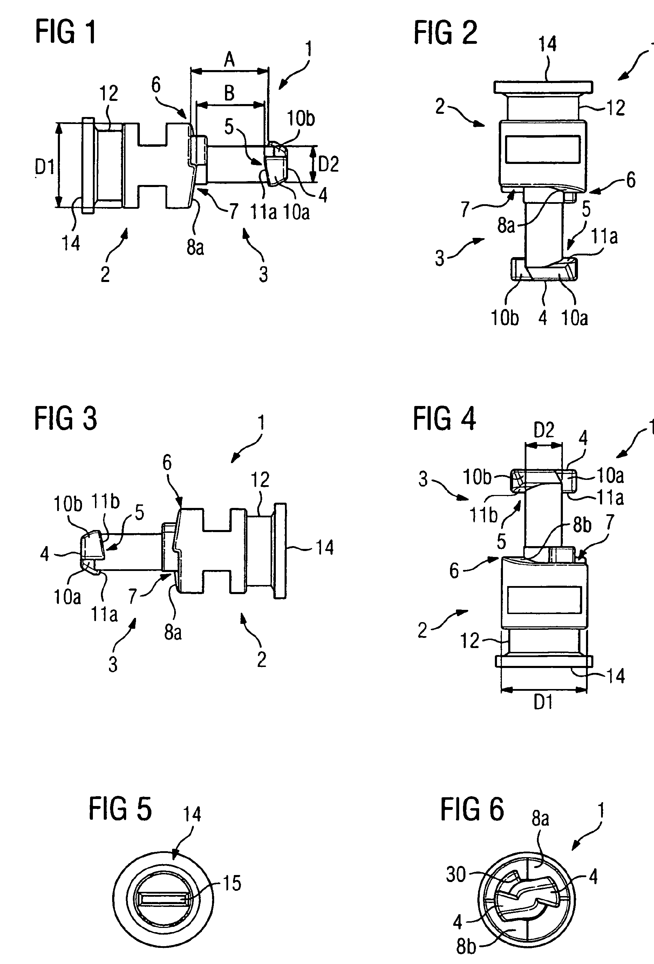

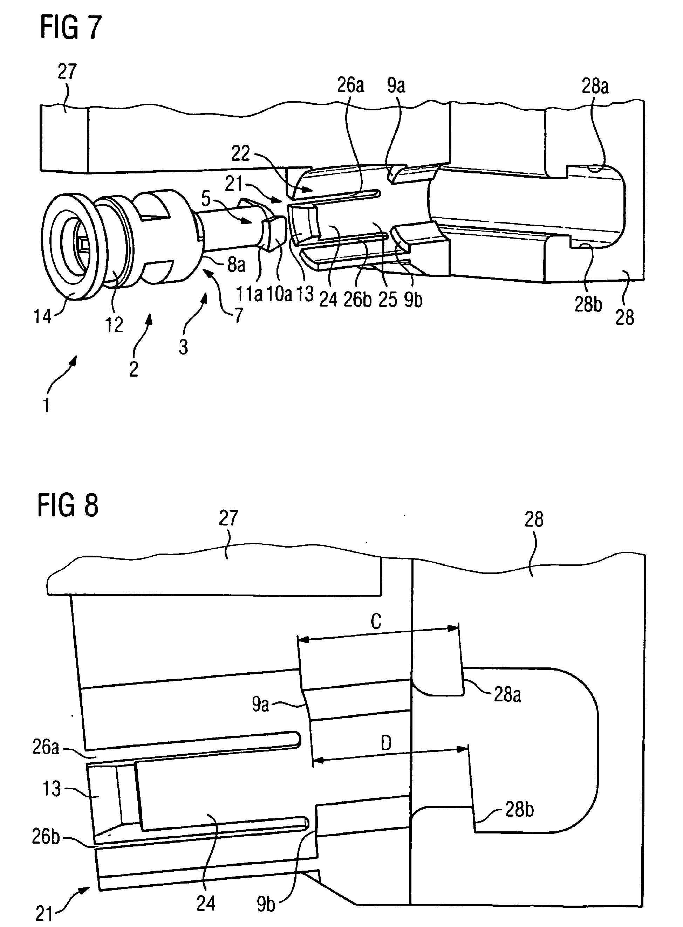

Gemäß den Figuren 1 bis 6 ist ein Befestigungselement 1 in sechs Ansichten dargestellt, wobei Figur 1 bis Figur 4 eine jeweils um 90° gedrehte Seitenansicht des Befestigungselementes 1 wiedergibt und FIG 5 eine Draufsicht auf einen Kopfbereich 14 des Befestigungselementes 1 sowie FIG 6 eine Unteransicht auf einen Spannflügel 4 des Befestigungselementes 1. Ausgehend von FIG 1 wird das Befestigungselement 1 durch einen Bolzen mit einem einen ersten Querschnitt aufweisenden ersten Bereich 2 und einem einen zweiten Querschnitt aufweisenden zweiten Bereich 3 gebildet. Der erste Bereich 2 weist dabei im Wesentlichen einen Durchmesser von D1 auf und der zweite Bereich 3 weist dabei im Wesentlichen einen Durchmesser von D2 auf, wobei der Durchmesser D1 größer ist als der Durchmesser D2. Der Durchmesser D1 springt an einem Übergang 6 auf den Durchmesser D2 des Bolzens. Dabei bildet sich an dem Übergang 6 eine zweite Auflagefläche 7. Die zweite Auflagefläche 7 weist einen ersten Gleitkeil 8a und einen zweiten Gleitkeil 8b auf, wobei ausgehend von einer Einsteckposition des Befestigungselementes 1 durch eine Drehbewegung eine Spannkraft in axialer Richtung bis zum Erreichen einer Verriegelungsposition erreicht werden kann. Dies setzt voraus, dass ein Spannflügel 4 mit einem ersten Flügelteil 10a mit einer ersten Schrägfläche 11a und einen zweiten Flügelteil 10b mit einer zweiten Schrägfläche 11b aufweist. Die erste und die zweite Schrägfläche 11a und 11b bilden dabei eine erste Auflagefläche 6. Diese Auflagefläche dient dazu ein Gehäuse 27 (siehe FIG 7 und FIG 8) an einer Profilschiene 28 zu verspannen.

In FIG 1 steht der erste Gleitkeil 8a der ersten Schrägfläche 11a gegenüber. Es bildet sich ein minimaler Abstand B zwischen dem ersten Gleitkeil 8a und der ersten Schrägfläche 11a. Analog dazu bildet sich ein maximaler Abstand A zwischen dem zweiten Gleitkeil 8b und der zweiten Schrägfläche 11b, welche aufgrund der Darstellung in FIG 1 nicht zu sehen sind (siehe hierzu FIG 4). Eine Differenz aus den Abständen A-B beschreibt dabei einen ersten Hub, welches das Befestigungselement 1 bei einer Drehbewegung ausführt.

Auch die erste Schrägfläche 11a und die zweite Schrägfläche 11b erzeugen einen weiteren Hub durch die Verankerung in der in FIG 7 dargestellten Profilschiene 28. Am Übergang 6 der zweiten Auflagefläche 7 ist ein Anschlag 30 angeordnet. Dieser Anschlag dient der Begrenzung einer Drehbewegung.

Gemäß FIG 5 ist die Draufsicht auf den Kopfbereich 14 dargestellt, innerhalb des Kopfbereiches 14 ist ein Schlitz 15 zur Aufnahme eines Schraubendrehers angeordnet.

FIG 6 zeigt eine Unteransicht des Befestigungselementes 1 auf den Spannflügel 4, wobei der erste Gleitkeil 8a und der zweite Gleitkeil 8b jeweils als Viertelsegmente der Zylinderfläche diametral gegenüberliegend angeordnet sind.

Gemäß FIG 7 ist eine perspektivische Darstellung des Befestigungselementes 1 und eines Gehäuses 27 zur Befestigung an einer Profilschiene 28 dargestellt. Ein Köcher 21 zur Aufnahme des Befestigungselementes 1 ist an dem Gehäuse 27 angeordnet. Der Köcher 21 weist in einer Köcherwand 24 einen ersten Längsschnitt 26a und einen zweiten Längsschnitt 26b auf. Durch den ersten Längsschnitt 26a und den zweiten Längsschnitt 26b wird ein Steg 24 gebildet.

Von einer Einsecköffnung 22 ausgehend gesehen weist der Steg 24 am Anfang eine Verrastnase 13 auf. Diese Verrastnase 13 ist dazu ausgestaltet in der Nut 12 des Befestigungselementes 1 einzurasten und das Befestigungselement 1 somit im eingesteckten Zustand unverlierbar zu dem Köcher 21 zu machen. Ist das Befestigungselement 1 in dem Köcher 21 eingeführt und befindet es sich in einer Einsteckposition so werden mittels einer Drehbewegung im Uhrzeigersinn der erste Gleitkeil 8a und der zweite Gleitkeil 8b auf eine erste Gegenfläche 9a und eine zweite Gegenfläche 9b, welche im Inneren des Köchers 21 an der Köcherwand 24 angeordnet sind, aufgelegt. Die erste Gegenfläche 9a bzw. die zweite Gegenfläche 9b bilden für den ersten Gleitkeil 8a bzw. den zweiten Gleitkeil 8b ein Widerlager zur kraftschlüssigen Aufnahme des ersten und des zweiten Gleitkeils 8a,8b. Die Gegenflächen 9a,9b weisen dabei einen rampenförmigen Verlauf auf.

Ausgehend von der Einsteckposition ragt der Spannflügel 4 mit seiner ersten Schrägfläche 11a und seiner zweiten Schrägfläche 11b in eine Profilschienennut der Profilschiene 28 hinein. Bei der genannten Drehung im Uhrzeigersinn verdreht sich auch der Spannflügel 4 so, dass er in einer Endposition mit seiner ersten Schrägfläche 11a auf einer zweiten Haltefläche 28b und mit seiner zweiten Schrägfläche 11b auf einer ersten Haltefläche 28a im Inneren der Profilschienennut zu liegen kommt. Durch die Drehbewegung und die gegeneinander angeordneten Gleitflächen 8a,8b zu den Gegenflächen 9a,9b entsteht ein erster Hub mit einem Hub von A-B, wie in FIG 1 dargestellt. Dieser Hub sorgt für die Entstehung einer axialen Spannkraft, welche die Profilschiene 28 an das Gehäuse 27 drückt und umgekehrt, das Gehäuse 27 mittels der Kraft auf den Köcher und auf die Gegenfläche 9.

Um den Gesamthub, welcher sich aus dem ersten und einem zweiten Hub zusammensetzt zu vergrößern, wobei sich der GesamtHub folgendermaßen zusammensetzt:

$$\text{Gesamt-Hub} = \text{Delta 1} + \text{Delta 2} = (A-B) + (C-D),$$

sind die erste und die zweite Gegenfläche 9a,9b derart angeordnet, dass sich ein weiterer maximaler Abstand C und ein weiterer minimaler Abstand D für die Bildung der rampenförmigen Fläche ergibt, siehe hierzu die FIG 8.

## Patentansprüche

1.  Befestigungselement (1) umfassend,

    - einen Bolzen mit einem einen ersten Querschnitt aufweisenden ersten Bereich (2) und
    - einem einen zweiten Querschnitt aufweisenden zweiten Bereich (3),
    - einen Spannflügel (4) mit einer ersten Auflagefläche (5), wobei der Spannflügel (4) im zweiten Bereich (3) angeordnet ist,
    - einen Übergang (6) von dem ersten auf dem zweiten Bereich (2,3), welcher zumindest teilweise als eine zweite Auflagefläche (7) ausgestaltet ist,

    wobei der Spannflügel (4) einen ersten Flügelteil (10a) mit einer ersten Schrägfläche (11a) und einen zweiten Flügelteil (10b) mit einer zweiten Schrägfläche (11b) aufweist, wobei die erste und die zweite Schrägfläche (11a, 11b) die erste Auflagefläche (5) bilden,
    wobei die erste und die zweite Auflagefläche (5,7) sich gegenüberliegend angeordnet sind, so dass zwischen der ersten Auflagefläche (5) und der zweiten Auflagefläche (7) durch Ausüben einer Drehbewegung ein erstes Materialteil und ein zweites Materialteil einspannbar sind, wobei ausgehend von einer Einsteckposition durch die Drehbewegung eine Spannkraft in axialer Richtung bis zum Erreichen einer Verriegelungsposition zunimmt,
    **dadurch gekennzeichnet, dass**
    die zweite Auflagefläche (7) zumindest einen ersten Gleitkeil (8a) und einen zweiten Gleitkeil (8b) aufweist.

2.  Befestigungselement (1) nach Anspruch 1, wobei der Spannflügel (4) zum Eindringen in eine Öffnung des zweiten Materialteils ausgestaltet ist.

3.  Befestigungselement (1) nach einem der Ansprüche 1 bis 2, wobei der erste Gleitkeil (8a) bzw. der zweite Gleitkeil (8b) zum kraftschlüssigen Anschmiegen an eine erste Gegenfläche (9a) bzw. an eine zweite Gegenfläche (9b) des zweiten Materialteils ausgestaltet ist.

4.  Befestigungselement (1) nach einem der Ansprüche 1 bis 3, wobei der erste Bereich (2) mit einer Nut (12) zur Aufnahme einer Verrastnase (13) ausgestaltet ist.

5.  Befestigungselement (1) nach einem der Ansprüche 1 bis 4, wobei ein Kopfbereich (14) des ersten Bereichs (2) zur Aufnahme eines Werkzeuges zum Ausüben der Drehbewegung ausgestaltet ist.

6.  Befestigungselement (1) nach einem der Ansprüche 1 bis 5, wobei am Übergang (6) ein Anschlag (30) zur Begrenzung der Drehbewegung angeordnet ist.

**Claims**

1. Fastening element (1) including,

   - a bolt with a first region (2) having a first cross-section and
   - a second region (3) having a second cross-section,
   - a clamping wring (4) with a first bearing surface (5), with the clamping wring (4) being arranged in the second region (3),
   - a transition point (6) between the first and the second region (2, 3), which is embodied at least partially as a second bearing surface (7),

   with the clamping wring (4) having a first wring part (10a) with a first bevel (11a) and a second wing part (10b) with a second bevel (11b), with the first and the second bevel (11a, 11b) forming the first bearing surface (6),
   with the first and the second bearing surface (5, 7) being arranged opposite to one another so that a first material part and a second material part can be clamped between the first bearing surface (5) and the second bearing surface (7) by executing a rotary motion, whereby, starting from an insertion position, a tension force increases in the axial direction until a locking position is reached as a result of the rotary motion,
   **characterised in that**
   the second bearing surface (7) has at least one first sliding part (8a) and a second sliding part (8b).

2. Fastening element (1) according to claim 1, whereby the clamping wring (4) is configured to penetrate into an opening in the second material part.

3. Fastening element (1) according to one of claims 1 to 2, whereby the first sliding part (8a) and/or the second sliding part (8b) are configured for the force-fit connection on a first opposing surface (9a) or on a second opposing surface (9b) of the second material part.

4. Fastening element (1) according to one of claims 1 to 3, whereby the first region (2) is configured with a groove (12) for receiving a latching lug (13).

5. Fastening element (1) according to one of claims 1 to 4, whereby a head region (14) of the first region (2) is configured to receive a tool to exert the rotary motion.

6. Fastening element (1) according to one of claims 1 to 5, whereby a stop (30) for restricting the rotary motion is arranged at the transition point (6).


**Revendications**

1. Elément ( 1 ) de fixation, comprenant

   - un axe ayant une première partie ( 2 ) ayant une première section transversale, et
   - un deuxième partie ( 3 ) ayant une deuxième section transversale,
   - une aile ( 4 ) de serrage ayant une première surface ( 5 ) d'application, l'aile ( 4 ) de serrage étant disposée dans la deuxième partie ( 3 ),
   - une transition ( 6 ) de la première à la deuxième partie ( 2, 3 ), qui est conformée au moins en partie sous la forme d'une deuxième surface ( 7 ) d'application,

   dans lequel l'aile ( 4 ) de serrage a une première partie ( 10a ) d'aile ayant une première surface ( 11a ) inclinée et une deuxième partie ( 10b ) d'aile ayant une deuxième surface ( 11b ) inclinée, la première et la deuxième surfaces ( 11a, 11b ) inclinées formant la première surface ( 5 ) d'application,
   dans lequel la première et la deuxième surfaces ( 5, 7 ) d'application sont disposées de manière opposée de façon à pouvoir serrer, entre la première surface ( 5 ) d'application et la deuxième surface ( 7 ) d'application en appliquant un mouvement de rotation, une première partie de matériau et une deuxième partie de matériau, dans lequel, en partant d'une position d'emmanchement, par le mouvement de rotation, une force de serrage dans la direction axiale augmente jusqu'à ce qu'une position de verrouillage soit atteinte,
   **caractérisé en ce que**
   la deuxième surface ( 7 ) d'application a au moins un premier coin ( 8a ) de glissement et un deuxième coin ( 8b ) de glissement.

**2.** Elément suivant la revendication 1, dans lequel l'aile ( 4 ) de serrage est conformée pour pénétrer dans une ouverture de la deuxième partie de matériau.

**3.** Elément suivant l'une des revendications 1 à 2, dans lequel le premier coin ( 8a ) de glissement ou le deuxième coin ( 8b ) de glissement est conformé pour épouser à complémentarité de force une première surface ( 9a ) antagoniste ou une deuxième surface ( 9b ) antagoniste de la deuxième partie de matériau.

**4.** Elément suivant l'une des revendications 1 à 3, dans lequel la première partie ( 2 ) est conformée par une rainure ( 12 ) pour la réception d'un bec ( 13 ) d'encliquetage.

**5.** Elément suivant l'une des revendications 1 à 4, dans lequel une partie ( 14 ) de tête de la première partie ( 2 ) est conformée pour la réception d'un outil afin d'appliquer le mouvement de rotation.

**6.** Elément suivant l'une des revendications 1 à 5, dans lequel une butée ( 30 ) de limitation du mouvement de rotation est disposée à la transition ( 6 ).

FIG 1

FIG 2

FIG 3

FIG 4

FIG 5

FIG 6

## FIG 7

## FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0943824 B1
- EP 0731282 A1

- DE 2328412 A1